# EUROPEAN PATENT SPECIFICATION

(11) **EP 3 228 843 B1**
(45) Date of publication and mention of the grant of the patent: **13.11.2019**
(21) Application number: 17164172.3
(22) Date of filing: 31.03.2017
(51) Int. Cl.: F02C 6/08, B64D 13/00, B64D 13/02, B64D 13/08, F02C 9/18

(54) **INTEGRATED AIRCRAFT ENVIRONMENTAL CONTROL AND BUFFER SYSTEM**
INTEGRIERTES UMWELTKONTROLL- UND -PUFFERSYSTEM FÜR FLUGZEUG
CONTRÔLE ENVIRONNEMENTAL INTÉGRÉ D'UN AÉRONEF ET SYSTÈME TAMPON

(30) Priority: 04.04.2016 US 201615089713
(43) Date of publication of application: 11.10.2017
(73) Proprietor: United Technologies Corporation, Farmington, CT 06032 (US)
(72) Inventor: SUCIU, Gabriel L., Glastonbury, CT 06033 (US); ACKERMANN, William K., East Hartford, CT 06118 (US)
(74) Representative: Dehns

(56) References cited:
- US-A1- 2010 107 594
- US-A1- 2014 165 588
- US-A1- 2014 250 898
- US-A1- 2016 090 917

## Description

### BACKGROUND OF THE INVENTION

This application relates to an environmental control system for an aircraft which utilizes both high and low pressure compressed air for uses in systems of an aircraft.

Environmental control systems utilize air tapped from the engine for use in various systems of the aircraft such as within the aircraft cabin. The systems typically selectively tap low pressure air from a lower pressure location, and higher pressure air from a higher pressure compressor location. The two locations are utilized at distinct times during the operation of a gas turbine engine, dependent on need, and available air.

Airflow tapped from the higher pressure locations is at temperatures higher than typically needed for an aircraft system and therefore requires cooling. An intercooler or heat exchanger is therefore required. Additionally, air tapped from the higher pressure locations has already been compressed to a high level using power generated by the engine. Higher pressure airflow diverted from a core flowpath can therefore reduce overall engine efficiency.

US 2014/250898 A1 discloses a prior art gas turbine engine as set forth in the preamble of claim 1.

US 2010/107594 A1 discloses a prior art turbine integrated bleed system and method for a gas turbine engine.

### SUMMARY OF THE INVENTION

From a first aspect, the invention provides a gas turbine engine as recited in claim 1.

In an embodiment the diverter valve controls airflow communicated to the combined outlet and the exhaust outlet based on a temperature of airflow exhausted from the turbine outlet and a desired air temperature of airflow provided to an aircraft system.

In another embodiment according to any of the previous embodiments, the diverter valve controls airflow communicated to the combined outlet and the exhaust outlet based on a cooling capacity of a heat exchanger downstream of the combined outlet.

In another embodiment according to any of the previous embodiments, a first control valve is positioned on the higher pressure tap and is operable to control operation of the turbocompressor. When the first control valve is in an open position, airflow is drawn into the compressor section of the turbocompressor from the lower pressure tap, and when the first control valve is in a closed position, airflow is not drawn through the compressor section of the turbocompressor and passes through the bypass passage.

Another embodiment according to any of the previous embodiments includes a second control valve operable to control airflow to the aircraft.

In another embodiment according to any of the previous embodiments, the second control valve is positioned downstream of a location at which the bypass passage and the combined outlet intermix into a common conduit.

Another embodiment according to any of the previous embodiments includes a heat exchanger within the combined conduit after the second control valve. The heat exchanger cools airflow through the common conduit.

Another embodiment according to any of the previous embodiments includes a buffer air passage receiving airflow from the lower pressure tap upstream of the compressor section.

Another embodiment according to any of the previous embodiments includes an engine buffer system for supplying airflow to bearing systems within the engine. The engine buffer system receives airflow from the lower pressure tap upstream of the compressor section of the turbocompressor.

These and other features of the invention would be better understood from the following specifications and drawings, the following of which is a brief description.

### BRIEF DESCRIPTION OF THE DRAWINGS

Figure 1 schematically shows an embodiment of a gas turbine engine.
Figure 2 shows an embodiment of an environmental control system for an aircraft.
Figure 3 shows a schematic of the Figure 2 system.

### DETAILED DESCRIPTION

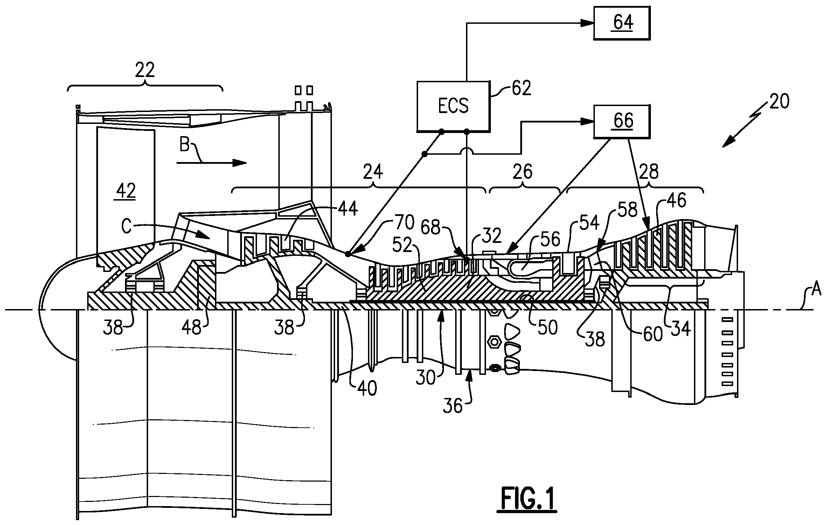

Figure 1 schematically illustrates an example gas turbine engine 20 that includes a fan section 22, a main compressor section 24, a combustor section 26 and a turbine section 28. Alternative engines might include an augmenter section (not shown) among other systems or features. The fan section 22 drives air along a bypass flow path B while the main compressor section 24 draws air in along a core flow path C where air is compressed and communicated to a combustor section 26. In the combustor section 26, air is mixed with fuel and ignited to generate a high pressure exhaust gas stream that expands through the turbine section 28 where energy is extracted and utilized to drive the fan section 22 and the main compressor section 24.

Although the disclosed non-limiting embodiment depicts a two-spool turbofan gas turbine engine, it should be understood that the concepts described herein are not limited to use with two-spool turbofans as the teachings may be applied to other types of turbine engines; for example a turbine engine including a three-spool architecture in which three spools concentrically rotate about a common axis and where a low spool enables a low pressure turbine to drive a fan directly or via a gearbox, an intermediate spool that enables an intermediate pressure turbine to drive a first compressor of the compressor section, and a high spool that enables a high pressure turbine to drive a high pressure compressor of the compressor section.

The example engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided.

The low speed spool 30 generally includes an inner shaft 40 that connects a fan 42 and a low pressure (or first) compressor section 44 to a low pressure (or first) turbine section 46. The inner shaft 40 drives the fan 42 through a speed change device, such as a geared architecture 48, to drive the fan 42 at a lower speed than the low speed spool 30. The high-speed spool 32 includes an outer shaft 50 that interconnects a high pressure (or second) compressor section 52 and a high pressure (or second) turbine section 54. The inner shaft 40 and the outer shaft 50 are concentric and rotate via the bearing systems 38 about the engine central longitudinal axis A.

A combustor 56 is arranged between the high pressure compressor 52 and the high pressure turbine 54. In one example, the high pressure turbine 54 includes at least two stages to provide a double stage high pressure turbine 54. In another example, the high pressure turbine 54 includes only a single stage. As used herein, a "high pressure" compressor or turbine experiences a higher pressure than a corresponding "low pressure" compressor or turbine.

The example low pressure turbine 46 has a pressure ratio that is greater than about 5. The pressure ratio of the example low pressure turbine 46 is measured prior to an inlet of the low pressure turbine 46 as related to the pressure measured at the outlet of the low pressure turbine 46 prior to an exhaust nozzle.

The disclosed example engine 20 includes a mid-turbine frame 58 of the engine static structure 36 arranged generally between the high pressure turbine 54 and the low pressure turbine 46. The mid-turbine frame 58 further supports bearing systems 38 in the turbine section 28 as well as setting airflow entering the low pressure turbine 46. Although the disclosed example engine embodiment includes a mid-turbine frame 58, it is within the contemplation of this disclosure to provide a turbine section without a mid-turbine frame.

Airflow through the core airflow path C is compressed by the low pressure compressor 44 then by the high pressure compressor 52 mixed with fuel and ignited in the combustor 56 to produce high speed exhaust gases that are then expanded through the high pressure turbine 54 and low pressure turbine 46. The mid-turbine frame 58 includes vanes 60, which are in the core airflow path and function as an inlet guide vane for the low pressure turbine 46. Utilizing the vane 60 of the mid-turbine frame 58 as the inlet guide vane for low pressure turbine 46 decreases the length of the low pressure turbine 46 without increasing the axial length of the mid-turbine frame 58. Reducing or eliminating the number of vane rows or stages in the low pressure turbine 46 shortens the axial length of the turbine section 28. Thus, the compactness of the gas turbine engine 20 is increased and a higher power density may be achieved.

The disclosed gas turbine engine 20 in one example is a high-bypass geared aircraft engine. In a further example, the gas turbine engine 20 includes a bypass ratio greater than about six, with an example embodiment being greater than about ten. The example geared architecture 48 is an epicyclical gear train, such as a planetary gear system, star gear system or other known gear system, with a gear reduction ratio of greater than about 2.3.

In one disclosed embodiment, the gas turbine engine 20 includes a bypass ratio greater than about ten and the fan diameter is significantly larger than an outer diameter of the low pressure compressor 44. It should be understood, however, that the above parameters are only exemplary of one embodiment of a gas turbine engine including a geared architecture and that the present disclosure is applicable to other gas turbine engines.

A significant amount of thrust is provided by the bypass flow B due to the high bypass ratio. The fan section 22 of the engine 20 is designed for a particular flight condition -- typically cruise at about 0.8 Mach and about 35,000 feet (10,668 metres). The flight condition of 0.8 Mach and 35,000 ft. (10,668 m), with the engine at its best fuel consumption - also known as "bucket cruise Thrust Specific Fuel Consumption ('TSFC')" - is the industry standard parameter of pound-mass (lbm) of fuel per hour being burned divided by pound-force (lbf) of thrust the engine produces at that minimum point.

Fan pressure ratio is the pressure ratio across the fan blade alone, without a Fan Exit Guide Vane ("FEGV") system. The low fan pressure ratio as disclosed herein according to one non-limiting embodiment is less than about 1.50. In another non-limiting embodiment the fan pressure ratio is less than about 1.45.

Corrected fan tip speed is the actual fan tip speed in ft/sec divided by an industry standard temperature correction of [(Tram °R)/(518.7°R)]^{0.5} (where °R = K x ⁹/₅). The corrected fan tip speed, as disclosed herein according to one non-limiting embodiment, is less than about 1150 ft/second (351 m/s).

The example gas turbine engine includes the fan 42 that comprises in one non-limiting embodiment less than about twenty-six fan blades. In another non-limiting embodiment, the fan section 22 includes less than about twenty fan blades. Moreover, in one disclosed embodiment the low pressure turbine 46 includes no more than about six turbine rotors schematically indicated at 34. In another non-limiting example embodiment the low pressure turbine 46 includes about three turbine rotors. A ratio between the number of fan blades 42 and the number of low pressure turbine rotors is between about 3.3 and about 8.6. The example low pressure turbine 46 provides the driving power to rotate the fan section 22 and therefore the relationship between the number of turbine rotors 34 in the low pressure turbine 46 and the number of blades 42 in the fan section 22 disclose an example gas turbine engine 20 with increased power transfer efficiency.

An environmental control system (ECS) 62 for use on an aircraft draws air from locations within the main compressor section 24 for use in various aircraft systems schematically indicated at 64. The ECS 62 draws airflow from a high pressure compression location 68 and a lower pressure location 70. The locations 68, 70 may both be within the high pressure compressor 52 or one may be in the lower pressure compressor section 44. The locations of both the higher pressure location and the lower pressure location depend on a desired pressure and temperature at each location. In this example, the higher pressure location 68 is downstream of the lower pressure location 70. Moreover, in this example air drawn from the higher pressure location 68 is at a higher temperature and pressure than air drawn from the lower pressure location 70.

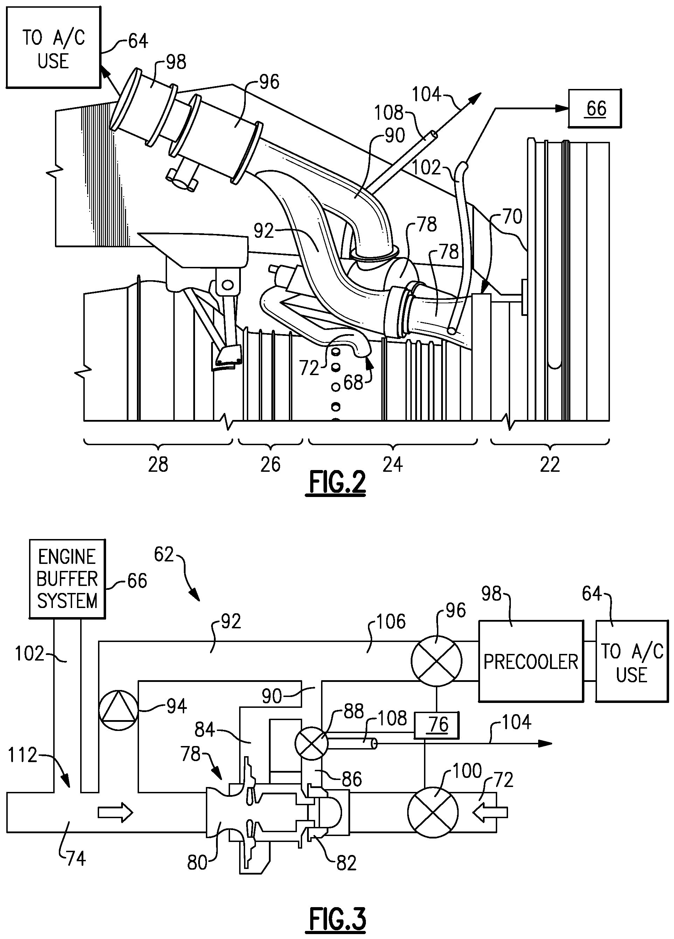

An air buffer system 66 is provided that supplies pressurized air to various bearing locations within the engine 20. Pressurized air is provided to bearing compartments in within the engine 20 to keep lubricant within the compartment and also maintains a desired temperature within the bearing compartment including the temperature of the bearing compartment walls. The example buffer system 66 includes a buffer passage 102 (Fig. 2) that taps lower pressure air from the lower pressure location 70 that also supplies the ECS 62. By tapping air from the same location as the ECS 62, additional openings in the engine static structure 36 are not required. Moreover, the buffer system 66 uses a small percentage of air compared to the air drawn for the ECS 62 and thereby does not meaningfully reduce the efficiency of the ECS 62.

Referring to Figures 2 and 3 with continued reference to Figure 1, the ECS 62 includes a turbocompressor 78 with a compressor section 80 driven by a turbine section 82. The turbine section 82 receives airflow from the higher pressure location 68 through a high pressure tap 72. The compressor section 80 receives airflow from the lower pressure location 70 through a low pressure tap 74. The high pressure tap 72 and the lower pressure tap 74 are conduits that draw air from points within the main compressor section 24 and communicate that airflow to the turbocompressor 78.

The compressor section 80 compresses airflow from the lower pressure tap 74 to a higher pressure and exhausts the compressed airflow into a compressor outlet 84. The turbine section 82 receives higher pressure airflow from the high pressure tap 72 that is expanded to drive the turbine section 82, and thereby the compressor section 80. Airflow exhausted from the turbine section 82 is communicated through turbine outlet 86. Depending on current engine operating conditions, airflow exhausted from the turbine section 82 may be mixed with airflow from the compressor section 80 to provide an intermixed airflow through a combined outlet 90.

The engine buffer system 66 taps air from the lower pressure tap 74 upstream of the compressor section 80 at an inlet 112. Because air is tapped upstream of the compressor section 80, flow is constant and not controlled by operation of the turbocompressor 78. The lower pressure airflow provided into the buffer system 66 is communicated to the various bearing system 38. The bearing systems 38 utilize the lower pressure buffer air to maintain lubricant and bearings at a desired pressure and temperature.

A first control valve 100 is provided in the higher pressure tap 72 to control airflow that drives the turbine section 82. A controller 76 directs operation of the first control valve 100 to open or close to control operation of the turbine section 82. With the first control valve 100 in an off position, the turbine section is not driven and the compressor section 80 is stopped. Airflow from the lower pressure tap 74 is therefore communicated through check valve 94 to a bypass passage 92 and into a common conduit 106 to the aircraft system 64. When the first control valve 100 is open, the turbine section 82 drives the compressor section 80 and draws air from the lower pressure tap 74. The pressure differential generated by operation of the compressor section 80 causes the check valve 94 to remain closed and prevent airflow into the bypass passage 92.

The temperature and pressure of airflow exhausted into the turbine outlet 86 enables coordination of the pressure and temperature of airflow communicated to the aircraft system 64. In some instances, mixing of the higher pressure and temperature airflow from the turbine section 82 with the lower pressor and temperature airflow of the compressor section is desirable and provides airflow to the aircraft system within a desired range of temperatures and pressures. However, some engine operating conditions generate mixed pressure airflows with higher temperatures than desired for the aircraft systems. A diverter valve 88 is provided within the turbine outlet 86 that controls the airflow into the combined outlet 90. Controlling airflow into the combined outlet 90 from the turbine section 82 controls a temperature of the intermixed airflow that is ultimately communicated to the aircraft system 64.

A heat exchanger or precooler 98 is provided in the common conduit 106 to cool airflow to a temperature desired for the aircraft system 64. The precooler 98 capacity to remove heat is limited by operational constraints as well as structural capacities. In most operating conditions, the precooler 98 provides the desired cooling capacity. However, in some rare operating conditions, the capacity of the precooler 98 is insufficient. In such instances, providing a precooler 98 with sufficient capacity for the rarely occurring operating conditions requires additional space and weight and excess capacity for the majority of operating conditions.

Accordingly, instead of increasing the capacity of the precooler 98, the diverter valve 88 is provided to dump airflow from the system. A controller 76 operates the diverter valve 88 to direct flow into an exhaust passage 108 to exhaust airflow 104 from the system such that the temperature of the air communicated to the aircraft system remains within desired ranges. The exhaust airflow 104 can be dumped into the fan bypass flow path or communicated back to sections within the engine compatible with airflow of the temperatures and pressure exhausted from the turbine section 82.

The ECS 62 includes a second control valve 96 that provides overall flow control to the downstream aircraft system. The controller 76 will direct the second control valve 96 to close to prevent airflow to the aircraft system 64 should airflow not be desired, or should the supplied airflow be outside of desired operating temperatures and pressures. Moreover, the valve 96 can be closed to stop airflow bypassing the turbocompressor 78 from entering the precooler 98 and aircraft systems in instances where the turbocompressor 78 is not operating.

Although an example embodiment has been disclosed, a worker of ordinary skill in this art would recognize that certain modifications would come within the scope of this disclosure. For that reason, the following claims should be studied to determine the scope and content of this disclosure.

## Claims

1. A gas turbine engine (20) comprising:
a fan section (22) delivering air into a main compressor section (24) where the air is compressed and communicated to a combustion section (26) where the air is mixed with fuel and ignited to generate a high energy flow that is expanded through a turbine section (28) that drives the fan and main compressor section (22,24);
a turbocompressor (78): and
an environmental control system (62) comprising:
a higher pressure tap (72) associated with a higher compression location (68) in the main compressor section (24), and a lower pressure tap (74) associated with a lower pressure location (70) in the main compressor section (24), said lower pressure location (70) being at a lower pressure than said higher pressure location (68), the lower pressure tap (74) communicating to a first passage leading to a downstream outlet, and having a second passage leading into a compressor section (80) of the turbocompressor (78), the higher pressure tap (72) leading into a turbine section (82) of the turbocompressor (78) such that air in the higher pressure tap (72) drives the turbine section (82) of the turbocompressor (78) to in turn drive the compressor section (80) of the turbocompressor (78);
a turbine outlet (86) receiving airflow exhausted from the turbine section (82) of the turbocompressor (78);
a compressor outlet (84) receiving airflow exhausted from the compressor section (80) of the turbocompressor (78);
a combined outlet (90) receiving airflow from the turbine outlet (86) and the compressor outlet (84) intermixing airflow and passing the mixed airflow downstream to be delivered to an aircraft; and
a diverter valve (88) controlling airflow from the turbine outlet (86) into the combined outlet (90) for controlling a temperature of airflow in the combined outlet (90),wherein the diverter valve (88) controls exhaust airflow (104) from the turbine outlet (86) to an exhaust outlet (108),
**characterised in that**
the engine (20) includes a check valve (94) controlling airflow from the lower pressure tap (74) through a bypass passage (92) between the lower pressure tap (74) and the combined outlet (90).

2. The gas turbine engine (20) as set forth in claim 1, wherein the diverter valve (88) controls airflow communicated to the combined outlet (90) and the exhaust outlet (108) based on a temperature of airflow exhausted from the turbine outlet (86) and a desired air temperature of airflow provided to an aircraft system.

3. The gas turbine engine (20) as set forth in claim 1 or 2, wherein the diverter valve (88) controls airflow communicated to the combined outlet (90) and the exhaust outlet (108) based on a cooling capacity of a heat exchanger (98) downstream of the combined outlet (90).

4. The gas turbine engine (20) as set forth in any preceding claim, wherein a first control valve (100) is positioned on the higher pressure tap (72) and is operable to control operation of the turbocompressor (78), wherein when the first control valve (100) is in an open position, airflow is drawn into the compressor section (80) of the turbocompressor (78) from the lower pressure tap (74), and when the first control valve (100) is in a closed position, airflow is not drawn through the compressor section (80) of the turbocompressor (78) and passes through the bypass passage (92).

5. The gas turbine engine (20) as set forth in claim 4, including a second control valve (96) operable to control airflow to the aircraft.

6. The gas turbine engine (20) as set forth in claim 5, wherein the second control valve (96) is positioned downstream of a location at which the bypass passage (92) and the combined outlet (90) intermix into a common conduit (106).

7. The gas turbine engine (20) as set forth in claim 6, including a or the heat exchanger (98) within the common conduit (106) after the second control valve (96), the heat exchanger (98) cooling airflow through the common conduit (106).

8. The gas turbine engine as set forth in any preceding claim, including a buffer air passage (102) receiving airflow from the lower pressure tap (74) upstream of the compressor section (80).

9. The gas turbine engine as set forth in any preceding claim, including an engine buffer system (66) for supplying airflow to bearing systems (38) within the engine, the engine buffer system (66) receiving airflow from the lower pressure tap (74) upstream of the compressor section (80) of the turbocompressor (78).

## Patentansprüche

1. Gasturbinentriebwerk (20), umfassend:
einen Gebläseabschnitt (22), der Luft in einen Hauptverdichterabschnitt (24) liefert, wo die Luft verdichtet und zu einem Brennraumabschnitt (26) geleitet wird, wo die Luft mit Treibstoff gemischt und entzündet wird, um einen Hochenergiestrom zu erzeugen, der durch einen Turbinenabschnitt (28) expandiert wird, der den Gebläse- und den Hauptverdichterabschnitt (22, 24) antreibt;
einen Turboverdichter (78); und
ein Umweltkontrollsystem (62), das Folgendes umfasst:
einen Anschluss (72) mit höherem Druck, der mit einer Stelle (68) höherer Verdichtung in dem Hauptverdichterabschnitt (24) verbunden ist, und einen Anschluss (74) mit niedrigerem Druck, der mit einer Stelle (70) mit niedrigerem Druck in dem Hauptverdichterabschnitt (24) verbunden ist, wobei die Stelle (70) mit niedrigerem Druck einen niedrigeren Druck als die Stelle (68) mit höherem Druck aufweist, wobei der Anschluss (74) mit niedrigerem Druck mit einem ersten Kanal verbunden ist, der zu einem stromabwärtigen Auslass führt, und einen zweiten Kanal aufweist, der in einen Verdichterabschnitt (80) des Turboverdichters (78) führt, wobei der Anschluss (72) mit höherem Druck in einen Turbinenabschnitt (82) des Turboverdichters (78) führt, so dass Luft in dem Anschluss (72) mit höherem Druck den Turbinenabschnitt (82) des Turboverdichters (78) antreibt, um wiederum den Verdichterabschnitt (80) des Turboverdichters (78) anzutreiben;
einen Turbinenauslass (86), der den Luftstrom aufnimmt, der von dem Turbinenabschnitt (82) des Turboverdichters (78) ausgestoßen wird;
einen Verdichterauslass (84), der den Luftstrom aufnimmt, der von dem Verdichterabschnitt (80) des Turboverdichters (78) ausgestoßen wird;
einen kombinierten Auslass (90), der den Luftstrom von dem Turbinenauslass (86) und dem Verdichterauslass (84) aufnimmt, den Luftstrom vermischt und den vermischten Luftstrom stromabwärts weiterleitet, so dass er einem Luftfahrzeug bereitgestellt wird; und
ein Umleitventil (88), das den Luftstrom von dem Turbinenauslass (86) in den kombinierten Auslass (90) steuert, um eine Temperatur des Luftstroms in dem kombinierten Auslass (90) zu steuern, wobei das Umleitventil (88) den Ausströmluftstrom (104) von dem Turbinenauslass (86) zu einem Ausströmauslass (108) steuert,
**dadurch gekennzeichnet, dass**
das Triebwerk (20) ein Rückschlagventil (94) beinhaltet, das den Luftstrom von dem Anschluss (74) mit niedrigerem Druck durch einen Nebenstromkanal (92) zwischen dem Anschluss (74) mit niedrigerem Druck und dem kombinierten Auslass (90) steuert.

2. Gasturbinentriebwerk (20) nach Anspruch 1, wobei das Umleitventil (88) den Luftstrom, der zu dem kombinierten Auslass (90) und dem Ausströmauslass (108) geleitet wird, basierend auf einer Temperatur des Luftstroms, der von dem Turbinenauslass (86) ausgestoßen wird, und einer erwünschten Lufttemperatur des Luftstroms, der einem Luftfahrzeugsystem bereitgestellt wird, steuert.

3. Gasturbinentriebwerk (20) nach Anspruch 1 oder 2, wobei das Umleitventil (88) den Luftstrom, der zu dem kombinierten Auslass (90) und dem Ausströmauslass (108) geleitet wird, basierend auf einer Kühlkapazität eines Wärmetauschers (98) stromabwärts des kombinierten Auslasses (90) steuert.

4. Gasturbinentriebwerk (20) nach einem der vorstehenden Ansprüche, wobei ein erstes Steuerventil (100) an dem Anschluss (72) mit höherem Druck angeordnet ist und betrieben werden kann, um den Betrieb des Turboverdichters (78) zu steuern, wobei, wenn sich das erste Steuerventil (100) in einer offenen Position befindet, der Luftstrom in den Verdichterabschnitt (80) des Turboverdichters (78) aus dem Anschluss (74) mit niedrigerem Druck gezogen wird, und wenn sich das erste Steuerventil (100) in einer geschlossenen Position befindet, der Luftstrom nicht durch den Verdichterabschnitt (80) des Turboverdichters (78) gezogen wird und durch den Nebenstromkanal (92) strömt.

5. Gasturbinentriebwerk (20) nach Anspruch 4, beinhaltend ein zweites Steuerventil (96), das betrieben werden kann, um den Luftstrom zum Luftfahrzeug zu steuern.

6. Gasturbinentriebwerk (20) nach Anspruch 5, wobei das zweite Steuerventil (96) stromabwärts einer Stelle angeordnet ist, an der sich der Nebenstromkanal (92) und der kombinierte Auslass (90) zu einer gemeinsamen Leitung (106) verbinden.

7. Gasturbinentriebwerk (20) nach Anspruch 6, beinhaltend einen oder den Wärmetauscher (98) innerhalb der gemeinsamen Leitung (106) nach dem zweiten Steuerventil (96), wobei der Wärmetauscher (98) den Luftstrom durch die gemeinsame Leitung (106) kühlt.

8. Gasturbinentriebwerk nach einem der vorstehenden Ansprüche, beinhaltend einen Pufferluftkanal (102), der den Luftstrom von dem Anschluss (74) mit niedrigerem Druck stromaufwärts des Verdichterabschnitts (80) aufnimmt.

9. Gasturbinentriebwerk nach einem der vorstehenden Ansprüche, beinhaltend ein Triebwerkspuffersystem (66) zum Liefern eines Luftstroms an Lagersysteme (38) innerhalb des Triebwerks, wobei das Triebwerkspuffersystem (66) einen Luftstrom von dem Anschluss (74) mit niedrigerem Druck stromaufwärts des Verdichterabschnitts (80) des Turboverdichters (78) aufnimmt.

## Revendications

1. Moteur à turbine à gaz (20) comprenant :
une section de soufflante (22) distribuant de l'air dans une section de compresseur principal (24) où l'air est comprimé et communiqué à une section de combustion (26) où l'air est mélangé avec du carburant et enflammé pour générer un écoulement à haute énergie qui est détendu à travers une section de turbine (28) qui entraîne les sections de soufflante et de compresseur principal (22, 24) ;
un turbocompresseur (78) : et
un système de contrôle environnemental (62) comprenant :
une prise de pression supérieure (72) associée à un emplacement de compression supérieure (68) dans la section de compresseur principal (24), et une prise de pression inférieure (74) associée à un emplacement de pression inférieure (70) dans la section de compresseur principal (24), ledit emplacement de pression inférieure (70) étant à une pression inférieure audit emplacement de pression supérieure (68), la prise de pression inférieure (74) communiquant avec un premier passage menant à une sortie en aval, et ayant un second passage menant dans une section de compresseur (80) du turbocompresseur (78), la prise de pression supérieure (72) menant dans une section de turbine (82) du turbocompresseur (78) de sorte que l'air dans la prise de pression supérieure (72) entraîne la section de turbine (82) du turbocompresseur (78) pour à son tour entraîner la section de compresseur (80) du turbocompresseur (78) ;
une sortie de turbine (86) recevant un écoulement d'air s'échappant de la section de turbine (82) du turbocompresseur (78) ;
une sortie de compresseur (84) recevant un écoulement d'air s'échappant de la section de compresseur (80) du turbocompresseur (78) ;
une sortie combinée (90) recevant un écoulement d'air de la sortie de turbine (86) et de la sortie de compresseur (84) mélangeant les écoulements d'air et faisant passer l'écoulement d'air mélangé en aval pour être distribué à un aéronef ; et
une vanne de dérivation (88) régulant l'écoulement d'air de la sortie de turbine (86) dans la sortie combinée (90) pour réguler une température d'écoulement d'air dans la sortie combinée (90), dans lequel la vanne de dérivation (88) régule l'écoulement d'air d'échappement (104) de la sortie de turbine (86) à une sortie d'échappement (108),
**caractérisé en ce que**
le moteur (20) inclut un clapet anti-retour (94) régulant l'écoulement d'air à partir de la prise de pression inférieure (74) à travers un passage de dilution (92) entre la prise de pression inférieure (74) et la sortie combinée (90).

2. Moteur à turbine à gaz (20) selon la revendication 1, dans lequel la vanne de dérivation (88) régule l'écoulement d'air communiqué à la sortie combinée (90) et à la sortie d'échappement (108) sur la base d'une température de l'écoulement d'air s'échappant de la sortie de turbine (86) et d'une température d'air souhaitée de l'écoulement d'air fourni à un système d'aéronef.

3. Moteur à turbine à gaz (20) selon la revendication 1 ou 2, dans lequel la vanne de dérivation (88) régule l'écoulement d'air communiqué à la sortie combinée (90) et à la sortie d'échappement (108) sur la base d'une capacité de refroidissement d'un échangeur de chaleur (98) en aval de la sortie combinée (90).

4. Moteur à turbine à gaz (20) selon une quelconque revendication précédente, dans lequel une première vanne de régulation (100) est positionnée sur la prise de pression supérieure (72) et est utilisable pour réguler le fonctionnement du turbocompresseur (78), dans lequel lorsque la première vanne de régulation (100) est dans une position ouverte, un écoulement d'air est aspiré dans la section de compresseur (80) du turbocompresseur (78) à partir de la prise de pression inférieure (74), et lorsque la première vanne de régulation (100) est dans une position fermée, l'écoulement d'air n'est pas aspiré à travers la section de compresseur (80) du turbocompresseur (78) et traverse le passage de dilution (92) .

5. Moteur à turbine à gaz (20) selon la revendication 4, incluant une seconde vanne de régulation (96) utilisable pour réguler l'écoulement d'air vers l'aéronef.

6. Moteur à turbine à gaz (20) selon la revendication 5, dans lequel ladite seconde vanne de régulation (96) est positionnée en aval d'un emplacement au niveau duquel le passage de dilution (92) et la sortie combinée (90) se mélangent dans un conduit commun (106).

7. Moteur à turbine à gaz (20) selon la revendication 6, incluant un ou l'échangeur de chaleur (98) à l'intérieur du conduit commun (106) après la seconde vanne de régulation (96), l'échangeur de chaleur (98) refroidissant l'écoulement d'air à travers le conduit commun (106).

8. Moteur à turbine à gaz selon une quelconque revendication précédente, incluant un passage d'air tampon (102) recevant un écoulement d'air à partir de la prise de pression inférieure (74) en amont de la section de compresseur (80).

9. Moteur à turbine à gaz selon une quelconque revendication précédente, incluant un système tampon de moteur (66) pour fournir un écoulement d'air à des systèmes de palier (38) à l'intérieur du moteur, le système tampon de moteur (66) recevant un écoulement d'air à partir de la prise de pression inférieure (74) en amont de la section de compresseur (80) du turbocompresseur (78).
